# FASCICULE DE BREVET EUROPEEN

(11) **EP 3 361 604 B1**
(45) Date de publication et mention de la délivrance du brevet: **08.04.2020**
(21) Numéro de dépôt: 18150234.5
(22) Date de dépôt: 03.01.2018
(51) Int. Cl.: H02K 3/493, H02K 15/00

(54) **STATOR DE MACHINE ELECTRIQUE TOURNANTE**
STATOR EINER ELEKTRISCH UMLAUFENDEN MASCHINE
STATOR OF AN ELECTRIC ROTATING MACHINE

(30) Priorité: 13.02.2017 FR 1751140
(43) Date de publication de la demande: 15.08.2018
(73) Titulaire: VALEO EQUIPEMENTS ELECTRIQUES MOTEUR, 94046 Créteil Cedex (FR)
(72) Inventeur: CHAILLOU, Jimmy, 62630 Etaples sur Mer (FR); BILTERYST, Pierre-Yves, 62630 Etaples sur Mer (FR); DELIANNE, Henri, 62630 Etaples sur Mer (FR); MARGUERITTE, David, 62630 Etaples sur Mer (FR); JOZEFOWIEZ, Eric, 62630 Etaples sur Mer (FR); PERREAUT, Sylvain, 62630 Etaples sur Mer (FR); EL-GHAZAL, Mohamed, 62630 Etaples sur Mer (FR)

(56) Documents cités:
- EP-A1- 1 763 919
- EP-A2- 0 235 597
- EP-A2- 0 297 278
- EP-A2- 1 463 184
- US-A1- 2004 263 018
- US-A1- 2015 001 984

## Description

La présente invention concerne le domaine des machines électriques tournantes et elle porte plus particulièrement sur la conception d'un stator d'une telle machine électrique tournante.

Il est connu d'utiliser des machines électriques tournantes dans les véhicules automobiles. Il peut notamment s'agir d'un alternateur polyphasé, configuré pour transformer de l'énergie mécanique en énergie électrique et inversement. Un tel alternateur réversible est appelé alterno-démarreur et permet dans un cas de fonctionnement d'utiliser l'énergie mécanique générée lors du roulage du véhicule pour recharger une batterie de ce véhicule et dans un autre cas de fonctionnement de réaliser un apport en énergie mécanique notamment pour démarrer le moteur thermique du véhicule.

Cette machine comporte essentiellement un carter et, à l'intérieur de celui-ci, un rotor, solidaire en rotation d'un arbre, et un stator, qui entoure le rotor avec présence d'un faible entrefer et qui comporte un corps doté d'encoches pour le montage des phases du stator. Le stator peut ainsi être décrit comme comportant un corps de stator et un bobinage de stator monté sur le corps de stator. Le corps de stator présente une alternance de dents et d'encoches, chaque encoche permettant le logement d'au moins un enroulement de bobinage autour d'une dent. Les enroulements sont obtenus par exemple à partir d'un fil continu, classiquement recouvert d'un isolant.

Ces enroulements polyphasés sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445 (US A 6 002 219).

L'enroulement des fils autour des dents du corps de stator peut présenter un inconvénient dans la mesure où le bobinage peut ne pas être bien fixé dans les encoches et peut sortir du volume défini du corps de stator, c'est-à-dire dépasser dans le diamètre interne du stator, ce qui induit un risque de collision avec le rotor en rotation à l'intérieur du corps de stator.

Il est connu de réaliser le corps de stator par un empilement de tôles, ou paquet de tôles, chaque tôle présentant une forme avec alternance de dents et d'encoches, la dimension axiale de celles-ci dans le corps de stator étant formée par l'empilement des tôles. Afin de résoudre le problème précédemment cité de l'échappement du bobinage hors du stator, il est connu de réaliser des formes spécifiques des tôles, en découpant l'extrémité libre des dents, c'est-à-dire leur extrémité tournée vers l'intérieur du stator, de telle façon qu'elles présentent des excroissances venant partiellement en travers des encoches disposées de part et d'autre de cette dent. L'empilement des tôles génère alors la formation d'une excroissance s'étendant axialement et réduisant la section de passage pour le fil du bobinage inséré dans l'encoche, de sorte qu'une fois inséré à force dans l'encoche, le bobinage de stator ne peut plus en sortir lors du fonctionnement du moteur. Le document EP 1463184 décrit une machine électrique tournante dont les excroissances sont créées par déformation pour maintenir les fils du bobinage dans l'encoche.

On comprend toutefois qu'une telle conception impose une insertion à force des fils du bobinage de stator dans l'encoche, ce qui risque de dégrader la structure du fil de bobinage de stator, ou d'enlever tout ou partie de la couche d'isolant entourant ce fil.

Il a ainsi été recherché une conception dans laquelle les dents ne présentent pas de pieds de dent, c'est-à-dire pas d'excroissances. Afin d'empêcher l'échappement du fil de l'encoche, le document US7808148 enseigne d'écraser radialement le fil afin d'augmenter sa largeur orthoradiale pour qu'il vienne en appui sur les bords de l'encoche. Mais comme précédemment, le fil et son isolant risquent d'être abimés au cours de cette opération.

La présente invention s'inscrit dans ce contexte et vise à proposer une machine électrique dans laquelle le bobinage de stator peut être correctement disposé sur le corps de stator, sans dégradation de celui-ci, tout en assurant son maintien en position dans le volume alloué au cours du fonctionnement du moteur.

L'objet de la présente invention est un stator de machine électrique tournante, selon la revendication 1, comprenant un corps de stator et un bobinage de stator porté par le corps de stator. Le corps de stator s'étend autour d'un axe et il est délimité par une surface radiale interne et une surface radiale externe. Il présente également une pluralité de dents formées respectivement entre deux encoches aménagées dans ledit corps de stator depuis la surface radiale interne et s'étendant axialement pour recevoir au moins un élément du bobinage de stator, de sorte que, suivant la circonférence du stator, celui-ci présente une alternance d'encoches et de dents. La dimension entre deux encoches successives entourant chaque dent est définie comme l'épaisseur de la dent.

Selon l'invention, le corps de stator présente au moins une dent déformée qui comporte, à son extrémité libre participant à définir la surface radiale interne du stator, au moins une excroissance s'étendant en travers d'une encoche voisine. L'excroissance est obtenue par déformation de matière de ladite dent déformée.

L'au moins une excroissance peut être formée par un bourrelet résultant d'un déplacement de matière et, plus précisément, par un déplacement de matière depuis la surface radiale externe du stator vers la surface radiale interne dudit stator.

Selon une caractéristique de l'invention, l'extrémité libre de la dent déformée peut comporter une excroissance s'étendant de part et d'autre de la dent, en travers de chaque encoche directement voisine de ladite dent déformée, permettant ainsi le blocage des éléments de bobinage du stator enroulés autour de cette dent et s'étendant dans les encoches directement adjacentes de part et d'autre de la dent.

L'extrémité libre de la dent déformée peut présenter, sur la surface radiale interne du stator, un sillon formant amorce ponctuelle ou linéaire, centrée par rapport à l'épaisseur de la dent.

Des excroissances peuvent être présentes sur l'ensemble des dents du stator. Elles sont obtenues par une déformation radiale des dents et peuvent être à des hauteurs différentes dans une même encoche. En d'autres termes, chaque dent peut être une dent déformée qui comporte à son extrémité libre au moins une excroissance obtenue par déformation radiale du stator. Et deux dents successives suivant la circonférence du stator peuvent présenter des excroissances agencées à des positions axiales différentes. Ainsi dans une même encoche pourront se faire face deux excroissances de deux dents successives à des niveaux axiaux différents permettant un blocage des éléments de bobinage du stator plus efficace.

Dans le prolongement radial des dents déformées, la surface radiale externe du stator présente un bossage écrasé résultant de la mise en œuvre du procédé permettant le déplacement de matière à l'origine des excroissances présentes sur lesdites dents déformées.

Le corps du stator peut être formé par un empilement axial de tôles les unes sur les autres de manière à former un paquet de tôles. L'agencement de ces tôles est fait de telle sorte qu'apparaisse au moins un bossage ménagé en saillie de la paroi externe dudit paquet de tôles. Cette paroi externe correspondra, après formation du corps du stator, à la surface radiale externe de celui-ci.

Ce bossage peut s'étendre axialement sur un nombre défini de tôles du paquet de tôles. Ainsi il pourra s'étendre sur toute la hauteur du paquet de tôles ou, préférentiellement, sur une portion seulement de cet axe, permettant ainsi l'agencement des excroissances en regard des mêmes encoches à des niveaux axiaux différents. Cet agencement en quinconce des excroissances permettra un meilleur maintien des éléments de bobinage du stator. Dans un tel paquet de tôles, c'est-à-dire avant déformation de la matière, les dents agencées dans le prolongement radial de chaque bossage sont droites et présentent, à l'opposé des bossages, des extrémités libres régulières, c'est-à-dire sans excroissance.

L'invention concerne également un outillage, selon la revendication 9, permettant l'obtention d'un stator par déformation du paquet de tôles tel que décrit ci-dessus. Cet outillage comporte un outil interne amené au contact des extrémités libres des dents d'au moins une tôle du paquet de tôles et un outil externe amené au contact de la paroi externe d'au moins une tôle du paquet de tôles.

L'outil interne peut présenter au moins une pointe, de sorte que cette pointe soit au contact d'une extrémité libre d'une dent d'une tôle du paquet de tôles. L'outil externe, quant à lui, peut présenter un profil régulier, configuré pour appuyer de façon régulière sur le pourtour du paquet de tôles et sur au moins un bossage.

L'invention concerne également un procédé d'obtention d'un stator selon la revendication 10, permettant l'obtention d'un stator par déformation du paquet de tôles tel que décrit ci-dessus. Afin d'obtenir le stator tel que décrit, on réalise tout d'abord une étape consistant en l'insertion des éléments de bobinage du stator dans les encoches formées par l'agencement du paquet de tôles puis une étape ultérieure consistant en la déformation de la matière du paquet de tôles par pression d'au moins un bossage au niveau de la paroi externe du paquet de tôles, par l'intermédiaire de l'outil externe, alors que les éléments du bobinage de stator sont logés dans leurs encoches respectives de manière à créer une excroissance, à l'extrémité opposée, en travers d'au moins une partie de l'encoche suivant la dent.

L'étape de déformation peut notamment se décomposer en, au moins, deux étapes. Une étape de positionnement des outils, et notamment d'un outil interne contre l'extrémité libre des dents et d'un outil externe sur le pourtour de la surface radiale externe, et une étape de déplacement de l'outil externe contre la paroi externe du paquet de tôles en direction de l'outil interne restant fixe. Le déplacement de cet outil externe vers l'outil interne fixe permet le déplacement de matière depuis la surface radiale externe du stator vers la surface radiale interne dudit stator, entrainant la déformation de la dent et créant ainsi les excroissances permettant le blocage définitif des éléments de bobinage du stator.

Il sera également possible de déposer un organe d'isolation électrique contre le corps du stator préalablement à l'insertion du ou des élément(s) de bobinage dans le corps du stator.

Ce stator pourra, par exemple, être mis en place dans une machine électrique tournante.

D'autres caractéristiques, détails et avantages de la présente invention ressortiront plus clairement à la lecture de la description détaillée donnée ci-après à titre indicatif, en relation avec les différents exemples de réalisation de l'invention illustrés sur les figures suivantes :
- la figure 1 est une représentation d'une machine électrique tournante comprenant au moins un stator selon un mode de réalisation classique,
- la figure 2 est une vue en perspective d'un corps de stator selon un mode de réalisation classique,
- la figure 3 représente schématiquement partiellement un stator selon l'invention, dans un plan de coupe perpendiculaire à l'axe de révolution du stator, après la mise en œuvre du procédé de déformation des dents entrainant la formation d'excroissances à leurs extrémités libres,
- la figure 4 est une représentation schématique partielle d'un corps de stator selon l'invention, dans un plan de coupe perpendiculaire à l'axe de révolution du stator, similaire à celui de la figure 3, rendant visible notamment des bossages agencés sur la surface radiale externe du stator, dans le prolongement radial des dents,
- les figures 5 et 6 représentent, schématiquement, une première étape du procédé de déformation des dents entrainant la formation d'excroissances à leur extrémité libre,
- la figure 7 représente, schématiquement, une deuxième étape du procédé de déformation des dents entrainant la formation d'excroissances à leur extrémité libre,
- la figure 8 représente, schématiquement, une extrémité libre d'une dent après qu'elle ait été déformée,
- les figures 9 et 10 sont des vues en perspective, respectivement des faces radiales externe et interne du stator, après la mise en œuvre du procédé de déformation des dents entrainant la formation d'excroissances à leur extrémité libre,
- la figure 11 est une schématisation de deux modes de mise en œuvre différents du procédé de déformation des dents entrainant la formation d'excroissances à leur extrémité libre.

Les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur.

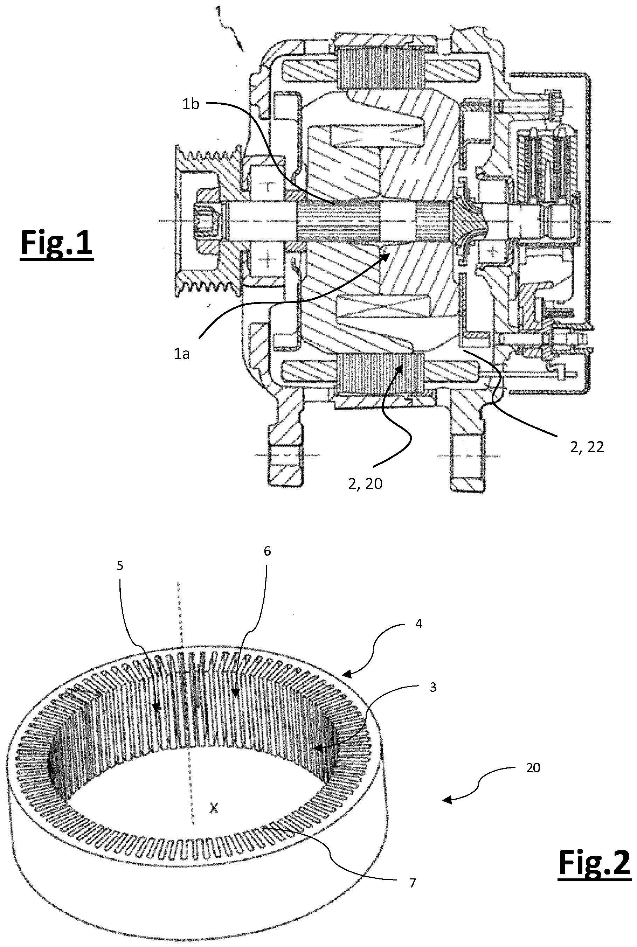

La figure 1 représente schématiquement une machine électrique tournante 1, comprenant un stator 2, rendu solidaire d'un carter de la machine, et un rotor interne la logé à l'intérieur du stator 2 et porteur d'un arbre d'entraînement 1b. Le stator 2 comporte un corps de stator 20 et un bobinage de stator 22, configuré et connecté électriquement pour interagir avec des aimants permanents ou des bobinages d'excitation, tel qu'ici illustré, associés au rotor.

La figure 2 montre une vue en perspective d'un corps de stator 20 selon un mode de réalisation classique. Le corps de stator 20 présente une forme annulaire présentant un axe de révolution X. Il comporte une surface radiale interne 3 et une surface radiale externe 4. La surface radiale externe 4 présente une forme continue, régulière et lisse tandis que la surface radiale interne 3 présente une forme discontinue avec des encoches 5 qui s'étendent radialement depuis la surface radiale interne 3 dans l'épaisseur du corps de stator 20. Il en résulte une alternance, sur la surface radiale interne 3 du corps de stator 20, de ces encoches 5 et de dents 6 formées par la matière restant entre les encoches 5. La surface radiale interne 3 est donc définie par l'alternance des extrémités libres 7 des dents 6 et des encoches 5. On définit la dimension entre deux encoches 5 successives entourant chaque dent 6 comme l'épaisseur de la dent.

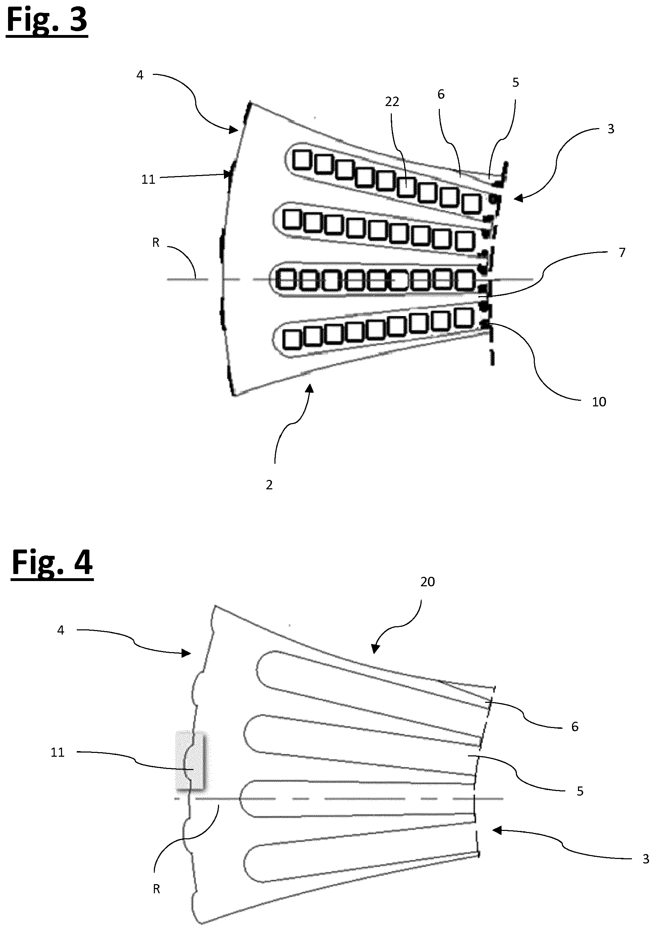

On va maintenant décrire le stator 2 selon l'invention, tel qu'illustré sur la figure 3, où il est notamment visible un bobinage de stator 22 qui est enroulé autour des dents en étant logé dans les encoches 5. Le stator 2 est composé du corps de stator 20 et du bobinage de stator 22, enroulé autour des dents 6 formées dans le corps de stator 20. Tel que cela sera décrit plus en détails ci-après, l'invention vise à déformer les dents 6 pour créer des excroissances 10 en travers des encoches 5 qui empêchent le dégagement du bobinage de stator 22 hors des encoches 5, et on comprend que le procédé de déformation de ces dents 6 est tel que ce n'est qu'une fois le bobinage de stator 22 positionné dans les encoches 5 que sera réalisée la déformation des dents 6 décrite ci-après permettant le blocage de ce bobinage de stator 22 dans le corps de stator 20.

La figure 3 représente le stator 2 selon l'invention après la mise en œuvre du procédé de déformation des dents 6 entrainant la formation d'excroissances 10 à leur extrémité libre 7, c'est-à-dire leur extrémité agencée au niveau de la surface radiale interne 3 du stator 2. Sur cette figure, on peut voir des bossages 11 écrasés, disposés sur la surface radiale externe 4 du stator 2, dans le prolongement radial des dents 6. On entend par « prolongement radial d'une dent » la matière du stator qui s'étend dans la continuité d'une dent, radialement, vers la surface radiale externe 4. Un bossage 11 forme une saillie du stator, ponctuelle et en extrémité de ce prolongement radial.

Tel que cela sera décrit ci-après, c'est l'écrasement de ces bossages 11 qui génère un déplacement de matière de la surface radiale externe 4 vers la surface radiale interne 3, et qui permet la formation des excroissances 10 aux extrémités libres 7 des dents 6, du fait en outre de l'utilisation d'un outillage approprié qui sera décrit ci-après. Comme représenté, ces excroissances 10 sont agencées en saillie des dents 6 de manière à ce qu'une excroissance 10 s'étende en travers au moins partiellement d'une encoche 5 directement voisine de la dent correspondante. Par « au moins partiellement », on comprend que l'excroissance 10 formée peut s'étendre à travers la totalité de l'encoche 5, ou bien seulement à travers une portion de ladite encoche 5, mais toujours au moins suffisamment pour permettre le blocage du bobinage de stator 22 dans les encoches 5 du corps de stator 20. Ainsi ce bobinage de stator 22 ne peut pas se déplacer vers l'intérieur du stator 2 évitant donc de gêner le mouvement d'un rotor disposé au centre du stator 2.

Le corps de stator 20 étant déformé par l'utilisation d'un outillage approprié lorsque le bobinage de stator 22 est en place dans les encoches 5, on comprend que la forme du corps de stator 20 à l'origine diffère de celle du corps de stator 20 dans le stator 2 en fonctionnement dans le moteur électrique. La forme du corps de stator 20 initiale diffère en effet de sa forme finale en ce que la surface radiale externe 4 du paquet de tôles présente des bossages plus marqués et en ce que sa surface radiale interne 3 ne présente pas d'excroissance 10 au niveau des dents 6 en travers des encoches 5.

Selon un mode de réalisation, le corps de stator 20 selon l'invention peut être réalisé par un empilement de tôles, formant un paquet de tôles. Ce paquet de tôles est ensuite déformé par l'intermédiaire des outillages qui vont être décrits ci-après.

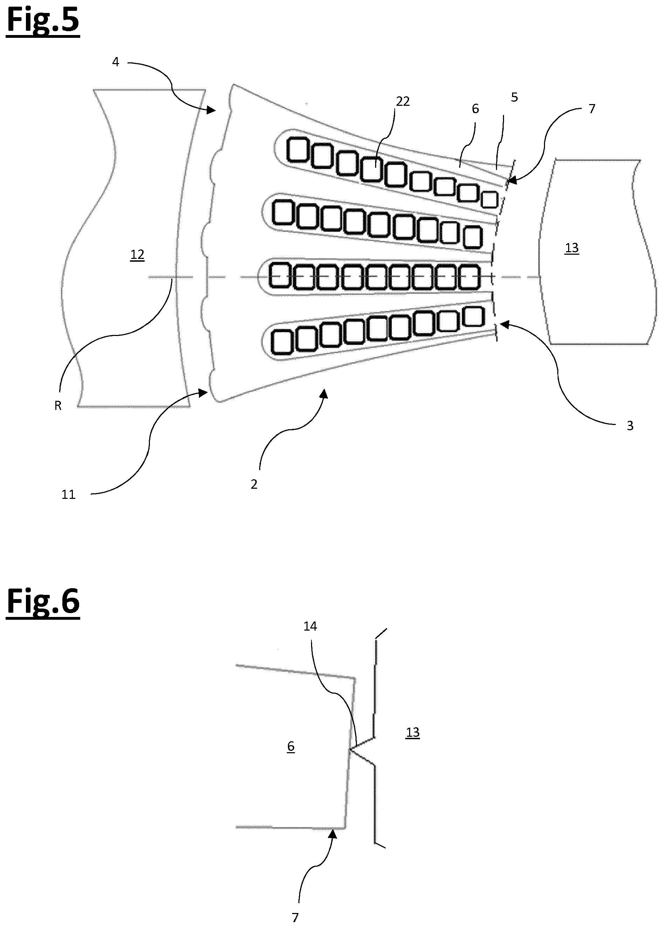

Nous allons maintenant décrire plus en détails la forme d'un paquet de tôles participant à former le corps de stator 20 dans sa forme d'origine (figure 4), avant déformation de matière, et les étapes d'usinage permettant de former le stator 2 par déformation de matière (figures 5 à 7, et 11).

La figure 4 est une représentation schématique d'une portion de tôle dans laquelle on a rendu visible une pluralité des dents 6 séparées des dents voisines par des encoches 5 creusées dans la tôle depuis la surface radiale interne 3. L'empilement des tôles est réalisé de manière à ce que les dents 6 et les encoches 5 de chaque tôle se superposent et forment ainsi des dents et encoches s'étendant axialement, c'est-à-dire parallèlement à l'axe de révolution X du stator 2. Dans le prolongement radial des dents 6, se trouve une série de bossages 11 ménagés en saillies de la surface radiale externe 4 du corps de stator 20. Tel que cela sera décrit ci-après, ces bossages 11 permettent un déplacement de matière de la surface radiale externe 4 vers la surface radiale interne 3, entrainant une déformation de l'extrémité libre 7 des dents 6 qu'ils prolongent radialement respectivement.

Toutes les dents 6 sont raccordées à une partie périphérique du corps de stator 20, appelée culasse. Chaque dent 6 présente une épaisseur minimale au niveau de son extrémité libre 7 et une épaisseur maximale au niveau de sa jonction avec la culasse. On parle alors de dent trapèze. Dans une variante de réalisation, chaque dent peut présenter une forme rectangle où son épaisseur est constante sur toute sa longueur. Ces bossages 11 ont une forme de dôme aplati : leur hauteur, mesurée le long de l'axe radial R du stator 2 est inférieure à leur largeur, mesurée sur la périphérie de la culasse du corps de stator 20. De plus, ladite largeur de ces bossages 11 ne dépasse pas l'épaisseur maximale de la dent 6, dans le prolongement radial de laquelle il se trouve.

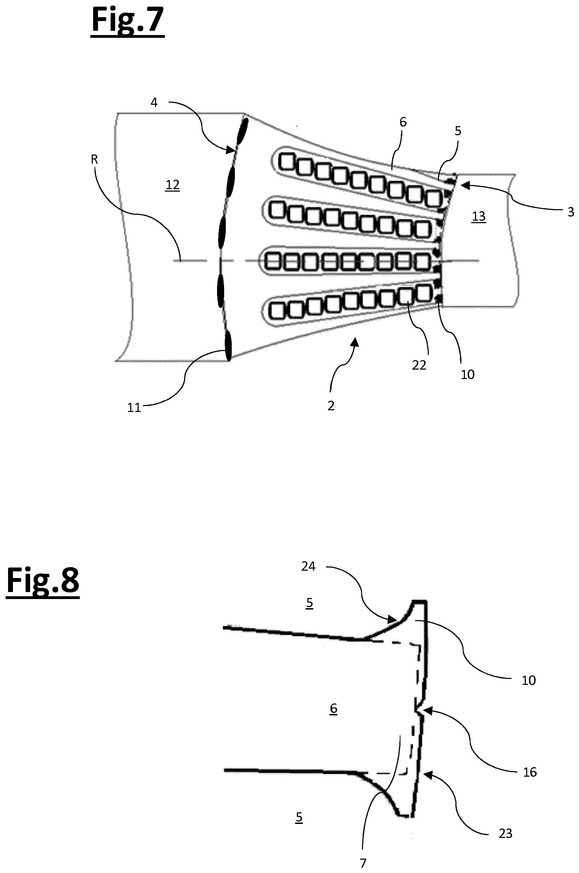

Avantageusement, la forme arrondie de ces bossages 11 facilite leur écrasement tandis que leur taille assure un déplacement de matière contrôlé et centré sur chaque dent 6 en regard de chaque bossage 11. Afin de mettre en œuvre le procédé permettant la déformation du corps de stator 20, deux outils, représentés notamment aux figures 5 et 7, sont nécessaires : un outil externe 12 configuré pour venir s'appuyer sur la surface radiale externe 4 du stator 2 et un outil interne 13, configuré pour prendre appui sur la surface radiale interne 3 du stator 2.

Ce procédé comprend au moins deux étapes successives parmi lesquelles une étape de positionnement des outils, alors que les fils du bobinage de stator sont disposés dans tout ou partie des encoches du corps de stator et une étape de presse du corps de stator 20 par rapprochement des outil l'un vers l'autre. Ces deux étapes sont détaillées ci-après et illustrées aux figures 5 à 8.

Les figures 5 et 6 représentent l'étape de positionnement des outils. L'outil interne 13 est positionné en contact des extrémités libres 7 des dents 6 du stator 2. Cet outil interne 13 est muni de pointes 14, visibles sur la figure 6, qui viennent se placer au contact de chaque extrémité libre 7 des dents 6. De préférence, ces pointes sont centrées sur les surfaces des extrémités libres 7 des dents 6 afin d'obtenir une répartition symétrique des excroissances 10 formées par déplacement de matière.

L'outil interne 13 peut prendre une forme circulaire, venant donc s'appuyer simultanément sur l'ensemble des extrémités libres 7 des dents 6. Ainsi l'étape de positionnement de l'outil interne 13 n'est à effectuer qu'une seule fois et cet outil interne 13 reste ensuite fixe, tout au long des autres étapes du procédé.

De plus, le positionnement de cet outil interne 13 permet un premier blocage, temporaire, des éléments de bobinage 22 dans le corps de stator 20, avant la mise en œuvre du procédé décrit.

L'outil externe 12 est, quant à lui, positionné sur le pourtour de la surface radiale externe 4 du stator 2, en regard des bossages 11, comme représenté sur la figure 5. Dans l'étape de positionnement tel qu'elle est présentée dans ce mode de réalisation, on comprend que l'outil interne est positionné contre le corps de stator alors que l'outil externe est positionné à distance de ce corps de stator. C'est le déplacement de l'outil externe, en rapprochement de l'outil interne, qui va permettre de mettre en contact l'outil externe avec le corps de stator et en premier lieu les bossages s'étendant en saillie de ce corps de stator. Ainsi, lors de la mise en œuvre du procédé susmentionné, cet outil externe 12 viendra écraser les bossages 11, permettant le déplacement de matière de la surface radiale externe 4 vers la surface radiale interne 3, entrainant la création des excroissances 10 aux extrémités libres 7 des dents 6.

La figure 7 schématise cette étape du procédé pendant laquelle une pression est exercée sur le corps de stator 20, par l'intermédiaire de l'outil externe 12, selon l'axe radial R depuis la surface radiale externe 4 vers la surface radiale interne 3.

L'outil interne 13 étant fixe, il permet de maintenir radialement le stator 2, de sorte que la matière du bossage 11 se déplace vers l'intérieur du corps de stator 20, dans le sens de déplacement de l'effort exercé par l'outil externe 12. Les bossages 11 sont écrasés par l'outil externe 12 et, par déplacement de matière de la surface radiale externe 4 vers la surface radiale interne 3, se forment des excroissances 10, qui prennent la forme de bourrelets, au niveau des extrémités libres 7 des dents 6.

Cette figure met en évidence que ces excroissances 10 permettent effectivement le blocage du bobinage de stator 22 dans les encoches 5, l'empêchant ainsi de se déloger et de gêner le mouvement du rotor positionné au centre du stator 2.

La figure 8 représente une extrémité libre 7 d'une dent 6, après que le procédé de déformation des dents décrit ci-dessus ait été mis en œuvre. Sur cette figure, on a représenté en pointillés l'extrémité libre 7 régulière de la dent avant que celle-ci soit déformée par déplacement de matière. On peut constater ainsi l'effet de la déformation de la dent, à savoir l'apparition d'un surplus de matière à l'extrémité libre 7 de la dent 6, au centre duquel on peut observer la formation d'un sillon 16 sur la totalité de la surface de la dent 6 en contact avec l'outil interne 13. Ce sillon 16 est formé suite à la pression exercée par la pointe 14 sur l'extrémité libre 7 de la dent 6. Selon un autre mode de réalisation, il est également envisageable de préformer ce sillon 16 dans la dent, avant sa déformation, ce qui permet de faciliter la mise en place de l'outil interne 13 en mettant en regard ce sillon 16 préformé et la pointe 14 présente sur l'outil interne 13.

L'excroissance 10 quant à elle est répartie de façon sensiblement symétrique, de chaque côté de ladite extrémité libre 7 de la dent 6. On observe, sur cette excroissance 10, une face avant 23 ayant pris la forme de l'outil interne 13 ainsi qu'une face arrière 24, dont la courbe est dessinée par une diminution de matière de la surface radiale interne 3 vers la surface radiale externe 4.

On comprend que dans une variante de réalisation ici non représentée, il est envisageable de concevoir un outil interne 13 présentant une languette qui vienne s'insérer dans l'une des encoches 7 entourant une dent 6 et qui bloque le déploiement de matière d'un côté de la dent 6, de sorte que le déplacement de matière obtenu suite à la déformation de la dent 6 est unilatéral.

Les bossages 11 dont l'écrasement est à l'origine du déplacement de matière de la surface radiale externe 4 vers la surface radiale interne 3 peuvent être positionnés à plusieurs niveaux selon le type de blocage souhaité. Plusieurs paramètres peuvent être modifiés : le nombre de bossages 11 en regard de chaque dent 6, le nombre de tôles sur lesquelles s'étendent les bossages 11 en regard de chaque dent 6, le nombre de dents 6 en regard desquels sont disposés les bossages 11 et également la quantité de matière utilisée pour faire ces bossages 11.

Un premier agencement consiste à positionner les bossages 11 sur toute la hauteur de la surface radiale externe 4 du corps de stator 20, c'est-à-dire sur toute la dimension axiale de celui-ci, et en regard de chaque dent 6. Si cet agencement présente un niveau maximal de blocage du bobinage de stator 22 dans les encoches du corps de stator, on comprend qu'il est possible de réaliser d'autres types d'agencements, moins coûteux en matière et donc plus léger et moins onéreux à la fabrication.

Les bossages 11 peuvent notamment ne pas s'étendre sur toute la hauteur, c'est-à-dire la dimension axiale du corps de stator, et être placés sur un nombre défini de tôles. On peut dès lors envisager une disposition selon laquelle on pourrait avoir plusieurs bossages 11 en regard de chaque dent 6, les uns au-dessus des autres selon la direction axiale du stator 2, chaque bossage 11 étant positionné sur un nombre défini de tôles. Ce système peut présenter un niveau de blocage équivalent à la disposition précédente tout en diminuant considérablement la quantité de matière utilisé pour la fabrication du stator 2.

Il est aussi parfaitement envisageable de ne positionner des bossages 11 qu'en regard d'une dent 6 sur deux. Chaque bossage 11 permet la création d'une excroissance 10 s'étendant dans chacune des encoches 5 voisines de la dent 6 déformée. Grâce à cette disposition, toutes les encoches 5 seront, au moins partiellement, traversées par une excroissance 10, tout en divisant au moins par deux la quantité de matière utilisée pour la fabrication des bossages 11 par rapport aux deux modes de réalisation précédents.

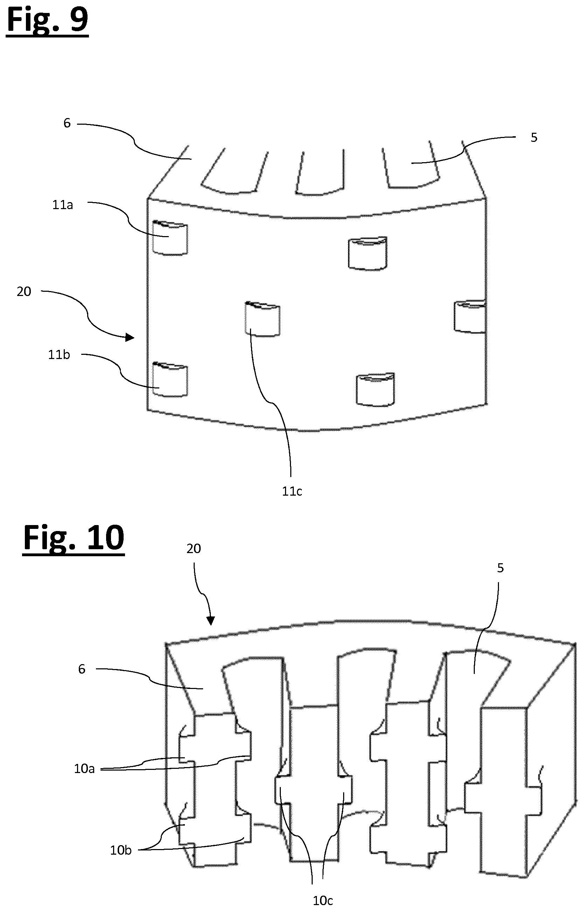

Selon un mode de réalisation particulier représenté sur les figures 9 et 10, et qui consiste en une combinaison des variantes évoquées ci-dessus, on pourra choisir de réaliser les bossages 11 sur la surface radiale externe 4 pour former un motif en quinconce. Tel que visible sur la figure 9, les bossages sont disposés en alternance, avec deux bossages 11a et 11b agencés axialement en regard d'une même première dent 6 puis un seul bossage 11c en regard de la dent 6 suivante, et ainsi de suite. Les excroissances 10 formées suite à la mise en œuvre du procédé décrit précédemment sont représentées en figure 10 et numérotées de 10a à 10c, chacune des lettres utilisées pour désigner les bossages 11 étant réutilisée pour désigner l'excroissance 10 correspondante.

Grâce à ce mode de réalisation, on obtient pour chacune des encoches un blocage aux extrémités axiales opposées du stator 2 mais également un blocage central, tout en diminuant la quantité de matière utilisée pour réaliser les excroissances 10.

Les bossages 11 pourront également être d'épaisseurs différentes. Selon l'épaisseur du bossage 11 choisie, et donc la quantité de matière prévue à l'origine en surplus du corps de stator 20, l'excroissance 10 obtenue après déplacement de matière au niveau de l'extrémité libre 7 de la dent 6 située dans le prolongement dudit bossage 11, est plus ou moins importante, ce qui permet d'ajuster le niveau d'obturation des encoches 7 et donc le niveau de blocage des éléments de bobinage 22 à l'intérieur du corps de stator 20.

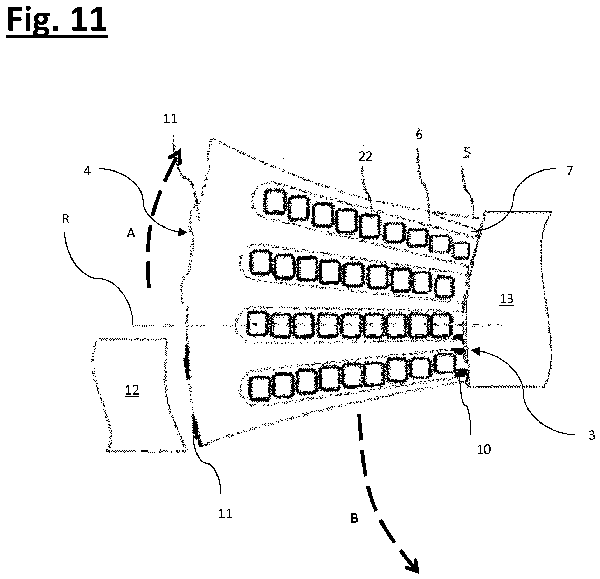

On va maintenant donner des précisions complémentaires sur le procédé de déformation du corps de stator pour l'obtention d'un stator selon l'invention permettant le blocage du bobinage de stator dans le corps de stator, en se référant notamment à la figure 11, qui est une schématisation de deux modes de mise en œuvre différents du même procédé de déformation des dents 6 permettant la formation des excroissances 10 à leurs extrémités libres 7.

Selon un premier mode de mise en œuvre, les éléments de bobinage de stator 22 sont tout d'abord enroulés autour des dents 6 du corps de stator 20. Dans un deuxième temps, l'outil interne 13, circulaire, est positionné contre le corps de stator, au niveau des extrémités libres 7 des dents 6, couvrant la totalité de la surface radiale interne 3. L'outil externe 12 est ensuite positionné à distance de la surface radiale externe 4 du corps de stator 20, puis une pression est exercée sur le corps de stator 20 par le déplacement de cet outil externe 12, selon l'axe radial R, vers l'outil interne 13 fixe, afin de permettre le déplacement de matière, dans le sens de déplacement dudit outil externe 12, tel que décrit précédemment. L'outil externe 12 ne couvrant pas, dans cet exemple, la totalité de la surface radiale externe 4, l'opération de pression de l'outil externe 12 selon l'axe radial R doit être répétée plusieurs fois en prenant soin, entre chaque pression, de déplacer l'outil externe 12 selon l'axe de rotation A, tel que représenté sur la figure 11. Il est à préciser que cette figure n'est qu'une schématisation et qu'il est tout à fait envisageable d'élaborer un outil externe 12 permettant de couvrir plus de deux bossages 11 à la fois, contrairement à ce qui est représenté sur ladite figure 11.

Selon un deuxième mode de mise en œuvre, dans lequel les premières étapes restent identiques à celles du mode de réalisation mentionné ci-dessus, c'est le stator 2, associé à l'outil interne 13 qui sera déplacé, selon un axe de rotation B, plutôt que l'outil externe 12. Il convient de nouveau de préciser que cette figure n'est qu'une schématisation et qu'il est tout à fait envisageable d'élaborer un outil externe 12 permettant de couvrir plus de deux bossages 11 à la fois, contrairement à ce qui est représenté sur ladite figure 11.

Quel que soit le mode de mise en œuvre choisi, les excroissances 10 sont donc formées au fur et à mesure et ne sont donc représentées, sur la figure 11, qu'en regard des bossages 11 ayant été écrasés par l'outil externe 12.

On comprend que la dimension tangentielle de l'outil externe 12 doit assurer un compromis entre sa capacité à se positionner au centre des bossages, afin d'assurer un déplacement de matière radiale, et la multiplicité des actions à réaliser. En effet, un outil externe 12 trop long risquerait d'engendrer une pression inégale sur la surface radiale externe 4 du stator 2, du fait de sa forme circulaire, et donc des excroissances 10 elles aussi inégales, risquant alors de ne plus pouvoir bloquer les éléments de bobinage 22 de façon optimale. En revanche, un outil externe 12 trop court, qui permettrait un positionnement précis en regard de chaque bossage 11, engendrerait un trop grand nombre d'opérations pour les techniciens en charge de la mise en œuvre du procédé. Il est donc important de trouver, pour cet outil externe 12, une dimension assurant un compromis entre ces deux contraintes.

Le procédé ainsi décrit permet donc d'obtenir, par déplacement de matière de la surface radiale externe 4 vers la surface radiale interne 3, des excroissances 10 assurant le blocage des éléments de bobinage 22 positionnés dans le corps de stator 20. Le bobinage de stator 22 ainsi bloqué dans ledit corps de stator 20 ne peut alors plus se déloger et ne peut donc plus venir gêner le mouvement du rotor disposé dans le stator 2.

De plus, dans ce procédé, ce n'est qu'une fois les éléments de bobinage de stator 22 mis en place dans le corps de stator 20 non déformé que sont mis en œuvre les moyens de déformation permettant le blocage de ces éléments de bobinage de stator 22. Ceux-ci sont donc bloqués, sans que ne soit générer d'entrave à leur insertion dans les encoches 5.

Cet avantage est obtenu par une conception spécifique du corps de stator 20. Celui-ci présente, dans sa forme d'origine, des zones de surplus de matière permettant, par déformation de matière vers les zones souhaitées, la formation d'excroissances 10 qui assurent le blocage des éléments du bobinage de stator 22. Cette conception permet donc d'enrouler les éléments de bobinage de stator 22 autour des dents 6 du corps de stator 2 non déformées avant de mettre en œuvre le procédé de déformation et donc de blocage desdits éléments de bobinage du stator 22. Ainsi, les éléments de bobinage de stator 22 sont bien bloqués dans le corps de stator 20, empêchant qu'ils ne gênent le mouvement du rotor interne mais sans pour autant qu'ils n'aient été déformés ou abîmés pour permettre leur insertion. En outre, la forme d'origine du corps du stator 20 ne présentant pas d'excroissance permet d'augmenter le taux de remplissage d'une encoche 5 en permettant l'insertion d'un bobinage 22 dont la largeur correspond à la largeur de l'encoche 5. De plus, lors du fonctionnement de la machine électrique tournante, les excroissances 10 crées par déformation permettent d'améliorer les performances magnétiques de ladite machine en remplaçant les pieds de dent d'une machine électrique tournante classique de l'art antérieur.

L'invention ne saurait toutefois se limiter aux moyens et configurations décrits et illustrés ici, et elle s'étend également à tous moyens ou configurations équivalents et à toute combinaison techniquement opérante de tels moyens, définis dans les revendications. En particulier, les étapes de mise en œuvre du procédé, ainsi que le positionnement des bossages 11 sur la paroi externe du paquet de tôles empilées peuvent être modifiés sans nuire à l'invention, dans la mesure où ils remplissent les fonctionnalités décrites et revendiquées dans le présent document.

## Revendications

1. Stator (2) de machine électrique tournante comprenant un corps de stator (20) et un bobinage de stator (22) porté par le corps de stator (20), dans lequel le corps de stator (20) est formé par un paquet de tôles empilées et s'étend autour d'un axe (X) en étant délimité par une surface radiale interne (3) et une surface radiale externe (4), ledit corps de stator (20) présentant une pluralité de dents (6) formées respectivement entre deux encoches (5) aménagées dans ledit corps de stator (20) depuis la surface radiale interne (3) et s'étendant axialement pour recevoir au moins un élément du bobinage de stator (22), de sorte que suivant la circonférence du stator (2), celui-ci présente une alternance d'encoches (5) et de dents (6),
**caractérisé en ce que** qu'il présente au moins une dent (6) déformée qui comporte, à son extrémité libre (7) participant à définir la surface radiale interne (3) du stator (2), au moins une excroissance (10) s'étendant en travers d'au moins une encoche (5) voisine, ladite excroissance (10) étant obtenue par déformation de matière de ladite dent (6) déformée
et **en ce que** ladite excroissance (10) est formée par un bourrelet résultant d'un déplacement de matière dans la dent (6) déformée, depuis la surface radiale externe (4) du stator (2) vers la surface radiale interne (3) du stator (2).

2. Stator (2) selon la revendication 1, **caractérisé en ce que** l'extrémité libre (7) de la dent (6) déformée comporte une excroissance (10) s'étendant de part et d'autre de la dent (6), en travers de chaque encoche (5) directement voisine de ladite dent (6) déformée.

3. Stator (2) selon l'une des revendications précédentes, **caractérisé en ce que** l'extrémité libre (7) de la dent (6) déformée présente sur la surface radiale interne (3) du stator (2) un sillon (16) formant amorce ponctuelle ou linéaire, centré par rapport à l'épaisseur de la dent (6) définie comme la dimension entre les deux encoches (5) successives entourant ladite dent (6).

4. Stator (2) selon l'une des revendications précédentes, **caractérisé en ce que** chaque dent (6) est une dent déformée qui comporte à son extrémité libre (7) au moins une excroissance (10) obtenue par déformation radiale.

5. Stator (2) selon l'une des revendications précédentes, **caractérisé en ce que** deux dents (6) successives suivant la circonférence du stator (2) présentent des excroissances (10) agencées à des positions axiales différentes.

6. Stator (2) selon l'une des revendications précédentes, **caractérisé en ce qu'**il comporte au moins un bossage (11) écrasé sur la surface radiale externe (4), dans le prolongement radial de la dent (6) déformée.

7. Paquet de tôles empilées axialement les unes sur les autres de manière à former un corps de stator (20) d'un stator (2) selon la revendication 6, **caractérisé en ce qu'**au moins un bossage (11) est ménagé en saillie de la paroi externe dudit paquet de tôles correspondant à la surface radiale externe (4) du corps de stator (20).

8. Paquet de tôles selon la revendication précédente, **caractérisé en ce que** les bossages (11) s'étendent axialement sur un nombre défini de tôles du paquet de tôles.

9. Outillage pour l'obtention d'un stator (2) selon l'une des revendications 1 à 6 par déformation d'un paquet de tôles selon la revendication 7 ou 8, **caractérisé en ce qu'**il comporte un outil interne (13) amené au contact de l'extrémité libre (7) des dents (6) d'au moins une tôle du paquet de tôles et un outil externe (12) amené au contact de la paroi externe d'au moins une tôle du paquet de tôles, l'outil externe (12) présentant un profil régulier, configuré pour appuyer de façon régulière sur le pourtour du paquet de tôles et d'au moins un bossage (11) et l'outil interne (13) présentant au moins une pointe (14) et étant positionné de sorte que cette pointe (14) soit au contact d'une extrémité libre (7) d'une dent (6) d'une tôle du paquet de tôles, de sorte que la matière du bossage (11) se déplace vers l'intérieur du corps de stator (20), dans le sens de déplacement de l'effort exercé par l'outil externe (12).

10. Procédé d'obtention d'un stator (2) selon l'une des revendications 1 à 6, au cours duquel on réalise :
- une étape d'insertion des éléments du bobinage de stator (22) dans les encoches (5) aménagées dans le paquet de tôles ;
- une étape de déformation de la matière du paquet de tôles en pressant au moins un bossage (11) au niveau de la paroi externe du paquet de tôles, par l'intermédiaire d'un outil externe (12) et d'un outil interne (13) mobiles relativement l'un par rapport à l'autre, alors que les éléments du bobinage de stator (22) sont logés dans leurs encoches (5) respectives, de manière à créer une excroissance (10) à l'extrémité opposée de la paroi externe du paquet de tôles, en travers de l'encoche (5).

11. Procédé selon la revendication précédente, **caractérisé en ce que** l'étape de déformation comprend une étape de positionnement d'un outil interne (13) contre l'extrémité libre (7) des dents (6), l'outil interne (13) bloquant également le passage des éléments de bobinage du stator (22) en dehors des encoches (5), et une étape de déplacement d'un outil externe (12) contre la paroi externe du paquet de tôles en direction de l'outil interne (13) restant fixe, ainsi qu'une étape de rapprochement des outils l'un vers l'autres.

12. Procédé selon la revendication 10 ou 11, **caractérisé en ce que** l'on réalise le dépôt d'un organe d'isolation électrique contre le corps du stator (20) préalablement à l'insertion du ou des élément(s) de bobinage de stator (22) dans le corps de stator (20).

13. Machine électrique tournante comprenant au moins un stator (2) selon l'une quelconque des revendications 1 à 6.

## Patentansprüche

1. Stator (2) einer rotierenden elektrischen Maschine, welcher einen Statorkörper (20) und eine von dem Statorkörper (20) getragene Statorwicklung (22) umfasst, wobei der Statorkörper (20) von einem Paket aus gestapelten Blechen gebildet wird und sich um eine Achse (X) erstreckt, wobei er von einer inneren radialen Fläche (3) und einer äußeren radialen Fläche (4) begrenzt wird, wobei der Statorkörper (20) eine Vielzahl von Zähnen (6) aufweist, die jeweils zwischen zwei Nuten (5) ausgebildet sind, die in dem Statorkörper (20) von der inneren radialen Fläche (3) ausgehend angeordnet sind und sich axial erstrecken, um wenigstens ein Element der Statorwicklung (22) aufzunehmen, derart, dass entlang des Umfangs des Stators (2) derselbe eine wechselnde Folge von Nuten (5) und Zähnen (6) aufweist,
**dadurch gekennzeichnet, dass** er wenigstens einen verformten Zahn (6) aufweist, welcher an seinem freien Ende (7), das an der Definition der inneren radialen Fläche (3) des Stators (2) beteiligt ist, wenigstens einen Vorsprung (10) aufweist, der sich quer zu wenigstens einer benachbarten Nut (5) erstreckt, wobei der Vorsprung (10) durch Verformung von Material des verformten Zahnes (6) erhalten wird,
und dadurch, dass der Vorsprung (10) von einer Wulst gebildet wird, die aus einer Verschiebung von Material in dem verformten Zahn (6) von der äußeren radialen Fläche (4) des Stators (2) in Richtung der inneren radialen Fläche (3) des Stators (2) resultiert.

2. Stator (2) nach Anspruch 1, **dadurch gekennzeichnet, dass** das freie Ende (7) des verformten Zahnes (6) einen Vorsprung (10) aufweist, der sich beiderseits des Zahnes (6) quer zu jeder Nut (5) erstreckt, die dem verformten Zahn (6) direkt benachbart ist.

3. Stator (2) nach einem der vorhergehenden Ansprüche, **dadurch gekennzeichnet, dass** das freie Ende (7) des verformten Zahnes (6) auf der inneren radialen Fläche (3) des Stators (2) eine einen punktförmigen oder linienförmigen Anriss bildende Rille (16) aufweist, die in Bezug auf die Dicke des Zahnes (6) zentriert ist, welche als die Abmessung zwischen den beiden aufeinander folgenden Nuten (5), die den Zahn (6) umgeben, definiert ist.

4. Stator (2) nach einem der vorhergehenden Ansprüche, **dadurch gekennzeichnet, dass** jeder Zahn (6) ein verformter Zahn ist, welcher an seinem freien Ende (7) wenigstens einen Vorsprung (10) aufweist, der durch radiale Verformung erhalten wurde.

5. Stator (2) nach einem der vorhergehenden Ansprüche, **dadurch gekennzeichnet, dass** zwei entlang des Umfangs des Stators (2) aufeinander folgende Zähne (6) Vorsprünge (10) aufweisen, die an unterschiedlichen axialen Positionen angeordnet sind.

6. Stator (2) nach einem der vorhergehenden Ansprüche, **dadurch gekennzeichnet, dass** er auf der äußeren radialen Fläche (4), in der radialen Verlängerung des verformten Zahnes (6), eine flachgedrückte Erhebung (11) aufweist.

7. Blechpaket aus Blechen, die axial aufeinandergestapelt sind, um so einen Statorkörper (20) eines Stators (2) nach Anspruch 6 zu bilden, **dadurch gekennzeichnet, dass** wenigstens eine Erhebung (11) ausgebildet ist, die über die äußere Wand des Blechpakets, die der äußeren radialen Fläche (4) des Statorkörpers (20) entspricht, vorsteht.

8. Blechpaket nach dem vorhergehenden Anspruch, **dadurch gekennzeichnet, dass** sich die Erhebungen (11) axial über eine definierte Anzahl von Blechen des Blechpakets erstrecken.

9. Werkzeuganordnung zur Herstellung eines Stators (2) nach einem der Ansprüche 1 bis 6 durch Verformung eines Blechpakets nach Anspruch 7 oder 8, **dadurch gekennzeichnet, dass** sie ein inneres Werkzeug (13), das mit dem freien Ende (7) der Zähne (6) wenigstens eines Bleches des Blechpakets in Kontakt gebracht wird, und ein äußeres Werkzeug (12), das mit der äußeren Wand wenigstens eines Bleches des Blechpakets in Kontakt gebracht wird, umfasst, wobei das äußere Werkzeug (12) ein regelmäßiges Profil aufweist, das dafür ausgebildet ist, gleichmäßig auf den äußeren Umfang des Blechpakets und wenigstens einer Erhebung (11) zu drücken, und das innere Werkzeug (13) wenigstens eine Spitze (14) aufweist und derart positioniert ist, dass sich diese Spitze (14) in Kontakt mit einem freien Ende (7) eines Zahns (6) eines Bleches des Blechpakets befindet, derart, dass sich das Material der Erhebung (11) zum Inneren des Statorkörpers (20) hin verschiebt, in der Bewegungsrichtung der von dem äußeren Werkzeug (12) ausgeübten Kraft.

10. Verfahren zur Herstellung eines Stators (2) nach einem der Ansprüche 1 bis 6, bei welchem durchgeführt werden:
- ein Schritt des Einsetzens der Elemente der Statorwicklung (22) in die in dem Blechpaket angeordneten Nuten (5);
- ein Schritt der Verformung des Materials des Blechpakets, indem wenigstens eine Erhebung (11) an der äußeren Wand des Blechpakets durch ein äußeres Werkzeug (12) und ein inneres Werkzeug (13), die relativ zueinander beweglich sind, gepresst wird, während die Elemente der Statorwicklung (22) in ihren jeweiligen Nuten (5) aufgenommen sind, um so einen Vorsprung (10) an dem der äußeren Wand des Blechpakets gegenüberliegenden Ende quer zu der Nut (5) zu erzeugen.

11. Verfahren nach dem vorhergehenden Anspruch, **dadurch gekennzeichnet, dass** der Schritt der Verformung einen Schritt der Positionierung eines inneren Werkzeugs (13) am freien Ende (7) der Zähne (6), wobei das innere Werkzeug (13) auch den Durchgang der Elemente der Statorwicklung (22) außerhalb der Nuten (5) blockiert, und einen Schritt einer Bewegung eines äußeren Werkzeugs (12) gegen die äußere Wand des Blechpakets in Richtung des fest bleibenden inneren Werkzeugs (13) umfasst, sowie einen Schritt der Annäherung der Werkzeuge aneinander.

12. Verfahren nach Anspruch 10 oder 11, **dadurch gekennzeichnet, dass** vor dem Einsetzen des Elements oder der Elemente der Statorwicklung (22) in den Statorkörper (20) die Aufbringung eines elektrischen Isolationsorgans auf den Statorkörper (20) durchgeführt wird.

13. Rotierende elektrische Maschine, welche wenigstens einen Stator (2) nach einem der Ansprüche 1 bis 6 umfasst.

## Claims

1. Stator (2) of a rotary electric machine comprising a stator body (20) and a stator coil (22) borne by the stator body (20), wherein the stator body (20) is formed by a lamination stack and extends about an axis (X) while being delimited by an internal radial surface (3) and an external radial surface (4), said stator body (20) having a plurality of teeth (6) formed respectively between two slots (5) formed in the said stator body (20) from the internal radial surface (3) and extending axially to house at least one element of the stator coil (22), so that, around the circumference of the stator (2), the latter exhibits an alternation of slots (5) and of teeth (6),
**characterized in that** it has at least one deformed tooth (6) which, at its free end (7) contributing to defining the internal radial surface (3) of the stator (2), has at least one protrusion (10) extending across at least one neighbouring slot (5), the said protrusion (10) being obtained by deforming the material of the said deformed tooth (6)
and **in that** the said protrusion (10) is formed by a bulge resulting from a displacement of material in the deformed tooth (6), from the external radial surface (4) of the stator (2) towards the internal radial surface (3) of the stator (2).

2. Stator (2) according to Claim 1, **characterized in that** the free end (7) of the deformed tooth (6) comprises a protrusion (10) extending on each side of the tooth (6), across each slot (5) directly neighbouring the said deformed tooth (6) .

3. Stator (2) according to one of the preceding claims, **characterized in that** the free end (7) of the deformed tooth (6) has, on the internal radial surface (3) of the stator (2) a groove (16) forming a point or linear starter, centred with respect to the thickness of the tooth (6) which thickness is defined as being the dimension between the two successive slots (5) flanking the said tooth (6) .

4. Stator (2) according to one of the preceding claims, **characterized in that** each tooth (6) is a deformed tooth which at its free end (7) comprises at least one protrusion (10) obtained by radial deformation.

5. Stator (2) according to one of the preceding claims, **characterized in that** two successive teeth (6) around the circumference of the stator (2) have protrusions (10) arranged at different axial positions.

6. Stator (2) according to one of the preceding claims, **characterized in that** it comprises at least one squashed boss (11) on the external radial surface (4), in the radial continuation of the deformed tooth (6).

7. Lamination stack with the laminations stacked axially on one another to form a stator body (20) of stator (2) according to Claim 6, **characterized in that** at least one boss (11) is formed as a projection from the external wall of said lamination stack corresponding to the external radial surface (4) of the stator body (20).

8. Lamination stack according to the preceding claim, **characterized in that** the bosses (11) extend axially over a defined number of laminations of the lamination stack.

9. Tooling for obtaining a stator (2) according to one of Claims 1 to 6 by deforming a lamination stack according to Claim 7 or 8, **characterized in that** it comprises an internal tool (13) brought into contact with the free end (7) of the teeth (6) of at least one lamination of the lamination stack and an external tool (12) brought into contact with the external wall of at least one lamination of the lamination stack, the external tool (12) having an even profile configured to press evenly on the periphery of the lamination stack and of at least one boss (11), and the internal tool (13) having at least one spike (14) and being positioned in such a way that this spike (14) is in contact with a free end (7) of a tooth (6) of a lamination of the lamination stack, so that the material of the boss (11) is displaced towards the inside of the stator body (20), in the direction of travel of the force exerted by the external tool (12).

10. Method for obtaining a stator (2) according to one of Claims 1 to 6, during which method there are performed:
- a step of inserting elements of the stator coil (22) into the slots (5) formed in the lamination stack;
- a step of deforming the material of the lamination stack by pressing at least one boss (11) on the external wall of the lamination stack using an external tool (12) and an internal tool (13) which tools are able to move relative to one another, while the elements of the stator coil (22) are housed in their respective slots (5), so as to create a protrusion (10) at the opposite end of the external wall of the lamination stack, across the slot (5).

11. Method according to the preceding claim, **characterized in that** the deformation step comprises a step of positioning an internal tool (13) against the free end (7) of the teeth (6), the internal tool (13) also blocking the passage of the elements of the stator coil (22) out of the slots (5), and a step of moving an external tool (12) against the external wall of the lamination stack in the direction of the internal tool (13) that remains stationary, as well as a step of moving the tools closer to one another.

12. Method according to Claim 10 or 11, **characterized in that** an electric insulation member is applied against the body of the stator (20) prior to the insertion of the element (s) of the stator coil (22) in the stator body (20) .

13. Rotary electric machine comprising at least one stator (2) according to any one of Claims 1 to 6.
